# FASCICULE DE BREVET EUROPEEN

(11) **EP 2 018 579 B1**
(45) Date de publication et mention de la délivrance du brevet: **18.05.2016**
(21) Numéro de dépôt: 07766048.8
(22) Date de dépôt: 15.05.2007
(51) Int. Cl.: G01S 15/89, G01S 7/524

(54) **SONAR FRONTAL AMELIORE**
VERBESSERTER FRONTALSONAR
IMPROVED FRONTAL SONAR

(30) Priorité: 16.05.2006 FR 0651763
(43) Date de publication de la demande: 28.01.2009
(73) Titulaire: IXBLUE, 78100 Saint-Germain-en-Laye (FR)
(72) Inventeur: JEAN, Frédéric, 83136 Meounes Les Montrieux (FR); MOSCA, Frédéric, 13013 Marseille (FR)
(74) Mandataire: Michelet, Alain
(86) Numéro de dépôt international: PCT/FR2007/051273
(87) Numéro de publication internationale: WO 2007/132125

(56) Documents cités:
- EP-A1- 0 568 427
- FR-A1- 2 688 894
- US-A- 4 970 700
- US-A- 5 596 549
- US-A1- 2005 099 887

## Description

L'invention a pour domaine celui des dispositifs acoustiques du type sonar qui permettent l'observation du fond marin en incidence rasante. Plus particulièrement, l'invention concerne des sonars équipant des porteurs qui peuvent être des bâtiments de surface ou des « poissons » immergés, autonomes ou remorqués par un navire de surface, se déplaçant le long d'une direction dite longitudinale X. Plus particulièrement encore, l'invention a pour domaine celui des sonars permettant d'observer une bande du fond marin située à l'aplomb du porteur le long de la direction longitudinale. Le sonar peut être l'unique système d'imagerie à bord du porteur ou il peut être couplé avec d'autres sonars et en particulier des sonars latéraux. Dans ce dernier cas, la bande à observée se situe entre deux zones latérales observées au moyen des sonars latéraux disposés sur chacun des flancs du porteur.

Les sonars latéraux ne permettent pas d'observer le fond marin sous un angle de visée inférieur à 30° par rapport à la verticale passant par le porteur et selon un plan perpendiculaire à la direction longitudinale X. En conséquence, la bande du fond marin située sous le ventre du porteur ne peut être observée lors du passage du porteur.

Pour obtenir des données sur cette bande intermédiaire au moyen de porteurs ne comportant que des sonars latéraux, il faut réaliser d'autres passages selon des trajectoires de navigation parallèles à une première trajectoire, de sorte que la bande inobservée lors du premier passage soit maintenant « visible » au moyen des sonars latéraux.

Bien évidemment, le fait d'avoir recours à d'autres passages pour obtenir une image sans « trou » du fond marin nécessite un temps d'acquisition supplémentaire. Or, ce temps a un coût puisqu'il correspond au fonctionnement de l'ensemble du dispositif d'acquisition, appareillage et équipage.

De plus, une précision plus importante de la cartographie finale du fond marin provient de la corrélation faite entre différentes images du même site. Or, le fait de ne pas posséder d'images redondantes, ou en posséder mais en plus faible nombre, réduit l'intérêt des traitements de données ultérieurs permettant la corrélation d'images. En conséquence, la résolution de l'image finale, par exemple une image en ombres et échos, est moins bonne.

Il y a donc un besoin pour un dispositif sonar embarqué sur le porteur permettant l'acquisition de données sonars relatives à la bande située sous le porteur, bande inobservée par d'autres moyens sonars.

Certes, il existe des porteurs équipés de sondeurs multifaisceaux qui sont des dispositifs acoustiques d'un autre type puisqu'ils permettent une observation du fond marin sous incidence normale. Mais les informations recueillies par ces dispositifs ne correspondent pas aux informations obtenues avec des sonars. Si les sonars permettent principalement d'obtenir des images en ombres et échos, les sondeurs permettent principalement d'obtenir des images topographiques ou bathymétriques.

Par ailleurs, il a été proposé de disposer à l'avant du porteur des sonars qui reprennent la technologie utilisée pour les sonars latéraux. Un tel sonar frontal est donc muni d'une antenne physique composite constituée par l'alignement selon la longueur de l'antenne d'une rangée de transducteurs. L'antenne est ainsi disposée sur le porteur de sorte qu'elle soit horizontale et que sa longueur coïncide avec la direction latérale Y du porteur. L'antenne du sonar frontal est donc disposée perpendiculairement aux antennes des sonars latéraux.

Or, on sait que la résolution d'un tel sonar est donnée par le rapport de la longueur d'onde de travail sur la longueur de l'antenne physique. Le porteur devant être hydrodynamique, il est facile de disposer des antennes ayant des dimensions linéaires importantes sur les flancs du porteur, mais la place disponible selon la largeur du porteur empêche de disposer des antennes de grandes longueurs à l'avant du porteur. En conséquence, les antennes physiques des sonars frontaux selon l'art antérieur sont de petites dimensions. Si les antennes physiques es sonars latéraux peuvent être en général de l'ordre de 2 m, les antennes des sonars frontaux sont plutôt de l'ordre de 50 cm.

Le fait de ne disposer que d'antennes courtes pour les sonars frontaux conduit à une dégradation de la résolution. En particulier, la résolution des images obtenues au moyen d'un sonar frontal est bien inférieure à la résolution de celles obtenues par les sonars latéraux du même porteur.

Un ordre de grandeur est donné par un sonar latéral dont l'antenne physique a une longueur de 2 m et qui a une fréquence de travail acoustique de l'ordre de 100 kiloHertz (kHz). Un tel sonar permet d'obtenir une résolution de 15 cm à une portée maximale de 300 m.

Il s'en suit que, même s'il y a une acquisition de données sur la bande centrale lors du premier passage, il sera nécessaire de multiplier des passages parallèles pour cartographier cette bande avec une résolution proche de celle des zones latérales observées par les sonars latéraux. Finalement, on se retrouve quasiment dans le cas d'un porteur qui n'est pas équipé d'un sonar frontal.

Pour augmenter la résolution d'une antenne physique dont la longueur est limitée, ne serait ce que pour des raisons d'hydrodynamique du porteur, il a donc été proposé d'augmenter le nombre de capteurs de l'antenne. Ainsi, par exemple, le projet COSMOS développé par l'IFREMER est un sonar frontal. Il comporte, pour l'émission, 125 émetteurs disposés en arc de cercle et, pour la réception, une antenne de 70 cm constituée de deux rangées comportant chacune 32 transducteurs. Un tel sonar frontal fonctionnant à 100 kHz permet d'atteindre une résolution de 160 cm à une portée de 80m.

Les désavantages d'une telle solution sont connus. D'abord chaque capteur doit être équipé d'une électronique qui est disposée à proximité du capteur. Il s'en suit que la densité de capteurs est limitée par l'encombrement stérique de l'électronique associée. Le nombre de voies de l'antenne est donc limité. De plus, le coût de l'antenne sonar augmente avec le nombre de capteurs utilisés. Enfin, le flot de données à traiter est important et la chaîne d'acquisition doit être particulièrement performante.

Il y a donc un besoin pour un sonar frontal dont la résolution soit identique ou tout au moins proche de celle des sonars latéraux utilisés mais qui comporte un nombre raisonnable de transducteurs.

On connaît par ailleurs du document US 2005/099 887 un système de sonar à imagerie développent des images tridimensionnelles des volumes en dessous, sur les côtés et sur l'avant d'un navire par rapport à un cadre de référence fixe. Ce document enseigne d'utiliser de préférence une antenne non lacunaire et de réduire le champ de vision afin de ne pas observer les lobes de diffraction en cas d'utilisation d'une antenne lacunaire.

Dans ce contexte, l'invention a pour objet un sonar frontal pour observer le fond marin qui comporte : des moyens d'insonification d'une zone du fond marin divisée en M secteurs aptes à réaliser une insonification caractéristique de chacun des secteurs de la zone lors d'une récurrence d'utilisation dudit sonar ; et, des moyens de réception comportant une antenne physique composée d'un réseau de K transducteurs, l'antenne étant lacunaire et par conséquent ambiguë de sorte qu'elle définit N lobes images. Chacun des secteurs insonifiés de manière caractéristique est associé à un unique lobe image de l'antenne, de sorte que l'ambiguïté de l'antenne est levée.

Les moyens d'insonification comportent autant de voies d'émission que de secteurs à insonifier de manière caractéristique.

Au cours d'une récurrence d'utilisation du sonar, chacune des voies d'émission émet autour d'une fréquence moyenne choisie dans une liste de fréquences moyennes, chaque voie d'émission émettant à une fréquence différente de celle d'une autre voie d'émission, la fréquence moyenne caractérisant l'insonification d'un secteur particulier.

Dans le mode de réalisation actuellement envisagé, les voies d'émission insonifient respectivement quatre secteurs, et quatre lobes utiles parmi les N lobes images de l'antenne sont respectivement associés aux quatre secteurs.

De préférence, le sonar selon l'invention autorise une résolution inférieure à 50cm pour une portée de 80m. De préférence encore, il autorise une résolution de 40cm pour une portée de 80m.

Dans le mode de réalisation actuellement préféré, l'antenne lacunaire a une longueur de 0,7 m, comporte 48 transducteurs et fonctionne à une fréquence de travail de 400 kHz.

L'invention a également pour objet un porteur muni d'un sonar frontal selon l'invention.

De préférence ledit porteur est immergé et comporte également deux sonars latéraux, le sonar frontal permettant d'obtenir une image sonar ayant une résolution compatible avec la résolution des images obtenues par les sonars latéraux.

L'invention a également pour objet un procédé d'observation d'une bande du sol marin au moyen d'un sonar frontal. Le procédé se caractérise en ce que, le sonar étant équipé d'une antenne lacunaire composée d'un réseau de K transducteurs définissant N lobes images, il consiste à :
- diviser une zone du fond marin à imager en plusieurs secteurs ;
- associer géométriquement à chacun des secteurs un lobe image unique ;
- insonifier de manière caractéristique chacun des secteurs grâce aux moyens d'insonification dudit sonar ;
- acquérir l'écho des ondes sonores émises au moyen de l'antenne lacunaire ;
- former les voies de l'antenne en levant l'ambiguïté de l'antenne en tenant compte de l'association d'un lobe image avec un secteur et de l'insonification caractéristique du secteur ;
- obtenir une image de la zone du fond marin.

Au cours de l'étape d'insonification, chacun des secteurs est insonifié au moyen d'un signal sonore ayant une fréquence moyenne caractéristique.

Comme déjà indiqué, au cours d'une récurrence d'utilisation du sonar, chacune des voies d'émission émet autour d'une fréquence moyenne choisie dans une liste de fréquences moyennes, chaque voie d'émission émettant à une fréquence différente de celle d'une autre voie d'émission, la fréquence moyenne caractérisant l'insonification d'un secteur particulier.

Au cours de l'étape d'insonification, chacun des secteurs peut en outre être insonifié au moyen d'un signal sonore émis à un instant caractéristique de la récurrence.

De préférence encore, l'étape de formation des voies est faites sur K récurrences des étapes d'insonification et d'acquisition de manière à synthétiser une antenne.

Le principe du sonar frontal selon l'invention est d'utiliser une antenne de réception lacunaire, et par conséquent ambiguë, et de lever l'ambiguïté sur le lobe image dans lequel se trouve effectivement la source de l'écho en insonifiant chaque secteur du fond marin correspondant angulairement à un lobe image par un signal sonore caractéristique.

Avantageusement, on contourne la limitation du nombre de capteurs en utilisant une antenne lacunaire tout en levant l'ambiguïté de cette antenne par une émission sectorisée.

Dans le mode de réalisation actuellement préféré, lors d'une récurrence de l'utilisation du sonar, les émissions sonores pour « éclairer » chacun des secteurs sont faites simultanément mais à des fréquences respectives distinctes. C'est donc une fréquence particulière qui caractérise le lobe image. En variante, les émissions sectorisées peuvent être faites à la même fréquence, mais à des instants successifs. C'est alors l'instant d'émission du signal sonore qui caractérise le lobe image. Dans encore une autre variante des signaux acoustiques orthogonaux sont utilisés. Chaque signal orthogonal caractérise alors un unique lobe image.

Puisque, dans l'application envisagée, le sonar frontal a pour but de compléter la carte fournie par les sonars latéraux, on serait plutôt incité à utiliser une fréquence de travail et une rasance proche de celles des sonars latéraux. Mais cet a priori ne peut être respecté si l'on veut s'approcher des performances requises en résolution. En effet, la résolution étant proportionnelle à λ/L et la longueur L de l'antenne étant nécessairement réduite, la longueur d'onde de travail λ doit également être réduite et donc la fréquence de travail f doit être augmentée. Avantageusement, dans l'antenne selon l'invention, on améliore la résolution en augmentant la fréquence de travail qui peut ainsi être portée jusqu'à 600kHz, fréquence de travail qui est à comparer aux 100kHz des sonars latéraux. Du coup la portée du sonar frontal est réduite. Il faut donc travailler à une incidence plus basse.

Avantageusement, le fait d'obtenir, entre le sonar frontal et un sonar latéral, deux images à des incidences différentes constitue un gain d'information. Cela présente également un intérêt pour le recalage qui est la mise en référence d'une image par rapport à l'autre ou par rapport à une référence absolue.

L'invention sera mieux comprise et d'autres buts, détails, caractéristiques et avantages de celle-ci apparaîtront plus clairement au cours de la description d'un mode de réalisation particulier de l'invention donné uniquement à titre illustratif et non limitatif en référence aux dessins annexés. Sur ces dessins :
- les Figures 1A et 1B représentent schématiquement le fonctionnement du sonar frontal selon l'invention, respectivement en vue latérale et en vue de dessus ;
- la Figure 2 représente la distribution des résolutions longitudinale et latérale sur une zone insonifiée ainsi que sur une zone imagée à 600 kHz;
- la Figure 3 représente de manière schématique l'antenne lacunaire utilisée dans le sonar frontal selon l'invention ;
- la Figure 4 représente le gain en fonction de l'angle d'observation dans le plan de visée de l'antenne lacunaire de la Figure 3 ;
- la Figure 5 représente le spectre en fréquence des ondes d'insonification émises à un instant donné par les moyens d'émission sectorisée du sonar frontal selon l'invention ;
- la Figure 6A représente la fonction de transfert entre l'émission et la réception lorsqu'un secteur insonifié est aligné angulairement avec un lobe image de l'antenne lacunaire de la Figure 4 ;
- la Figure 6B représente la fonction de transfert lorsque le secteur insonifié est angulairement décalé par rapport au lobe image de l'antenne lacunaire ; et,
- la Figure 7 représente la fonction de contraste du sonar frontal selon l'invention.

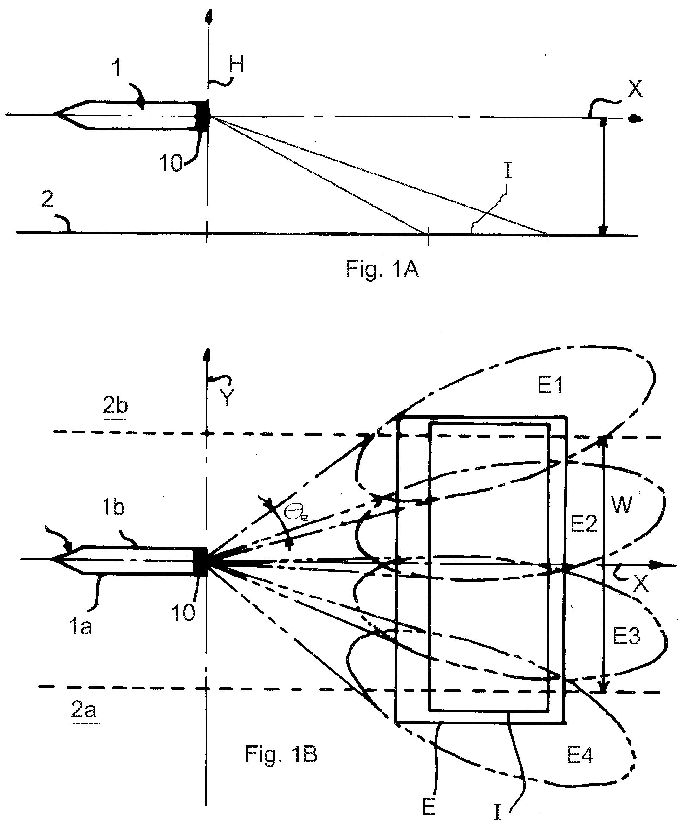

Sur la Figure 1, on a représenté, de manière schématique, le contexte dans lequel le sonar frontal selon l'invention trouve son utilisation la plus préférable. La Figure 1A est une représentation en vue de côté alors que la Figure 1B est une vue de dessus.

Un porteur 1, autonome ou tracté, est immergé de façon à être positionné à une altitude H d'environ 30 m par rapport au fond marin 2. Le porteur 1 se déplace sensiblement le long d'une trajectoire de navigation parallèle à son axe longitudinal X. La direction perpendiculaire à la fois à la direction X et à la direction H est une direction latérale Y.

Deux sonars latéraux (non représentés) disposés sur chacun des flancs 1 a et 1 b du porteur 1 permettent d'observer progressivement des zones latérales, respectivement 2a et 2b au cours du déplacement du porteur.

Entre ces zones observées par les sonars latéraux, il existe une bande de terrain d'une largeur W inobservée par les sonars latéraux qui ne peuvent travailler à un angle de visée inférieur à 30° par rapport à la verticale du porteur selon la direction latérale Y.

Il s'agit donc de cartographier une bande du fond marin située sous le porteur qui, lorsque celui-ci est à une altitude de 30 m par rapport au fond, correspond à une bande ayant une largeur W de 45 m environ.

Le porteur 1 selon l'invention est équipé d'un sonar 10 disposé à l'avant. Le sonar frontal 10 a pour but d'émettre une onde sonore apte à « éclairer » une zone insonifiée E du sol marin 2, et à « écouter » une zone imagée I, incluse dans la zone insonifiée E. Lors du déplacement du porteur 1, l'acquisition d'une succession de zones imagées permet de reconstruire progressivement l'image de la bande centrale inobservée par les sonars latéraux.

Les contraintes sur l'antenne sont les suivantes. L'envergure maximale raisonnable de l'antenne disposée selon la direction latérale Y est de 0,7 m. Compte tenu de l'encombrement stérique de l'électronique d'acquisition, le nombre de canaux disponibles pour la réception est de l'ordre de 48. La fréquence de travail doit être inférieure à 600 kHz, car au delà de cette fréquence maximale les effets d'absorption du signal par la masse d'eau deviennent trop importants.

L'essentiel de la résolution latérale dY dépend de l'antenne de réception. En effet : dY = λ x R / L = λ x R / (Ni x d), où Ni est le nombre de capteurs et d le pas inter-capteurs. Ces deux paramètres étant donnés, ce sont la portée et la fréquence qui vont entièrement déterminer la résolution.

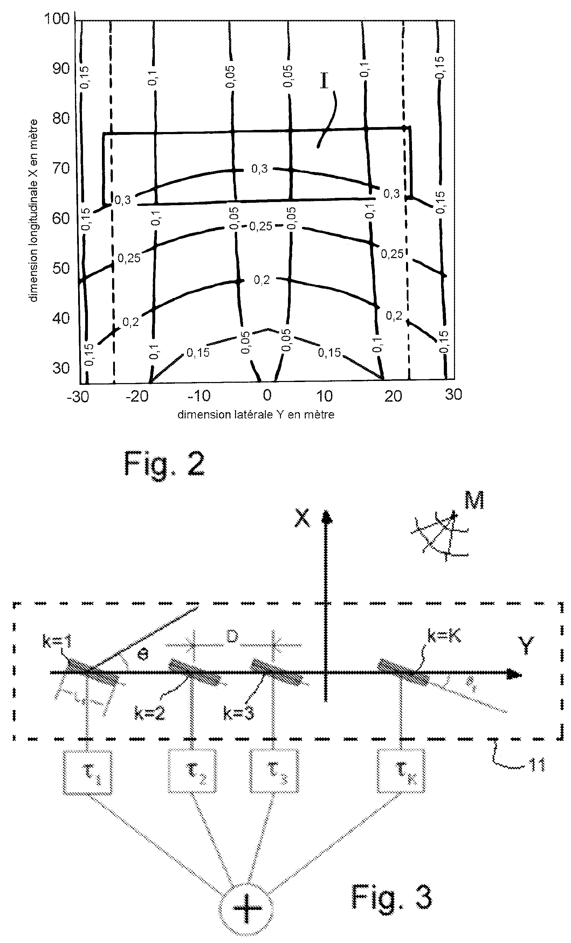

La figure 2 représente une simulation numérique donnant les résolutions latérale et longitudinale pour le champ à observer à une certaine fréquence de travail f. Les courbes noires relient les points ayant la même résolution latérale, et les courbes blanches relient les points ayant la même résolution longitudinale. En faisant varier le paramètre de la fréquence de travail d'une simulation à l'autre, on peut sélectionner la fréquence permettant d'obtenir la meilleure résolution latérale moyenne dans la zone imagée I. On notera que la résolution longitudinale ne dépend pas des caractéristiques géométriques de l'antenne. Ainsi la fréquence de travail optimale choisie est de 600 kHz, la zone à imager étant à une portée de 80m. En conséquence, la résolution atteinte compte tenu des contraintes du système est inférieure à 50cm.

La résolution latérale actuellement effectivement atteinte par un sonar frontal expérimental réalisé selon le mode de réalisation décrit est de 40 cm à une portée de 80 m avec une fréquence de travail de 400 kHz.

En se référant à la figure 3, l'antenne 11 du sonar 10 est constituée par une rangée de transducteurs k, k variant entre 1 et K=48, fonctionnant en réception. Les différents transducteurs sont disposés en rang selon la direction latérale Y de manière à former un réseau périodique. Les récepteurs sont séparés d'un pas d dans la direction Y. Pour gagner en généralité, chaque transducteurs forme un parallélépipède rectangle de longueur Lᵣ faisant un angle θᵣ avec la direction Y (dans le sonar frontal selon l'invention, l'angle θᵣ des transducteurs est nul : θᵣ=0).

Cette antenne lacunaire 11 permet d'observer une source M sous un angle θ dans le plan XY. On considère que l'onde émise par la source M est une onde incidente plane au niveau de l'antenne 11. Les signaux acoustiques respectivement perçus par chacun des transducteurs sont donc identiques à un déphasage temporel prêt. Il s'agit alors, en jouant sur les coefficients τ₁ à τₖ de corriger ce déphasage pour reconstruire l'onde incidente plane.

On montre que le rapport du pas d entre capteurs (d=L/K) sur la longueur d'onde λ de la fréquence de travail choisie est égale approximativement à quatre. Ceci signifie que l'antenne 11 est largement sous-échantillonnée. Il s'agit donc d'une antenne lacunaire présentant des lobes images en réception.

Le fait que le pas d séparant deux transducteurs k et k+1 successifs soit supérieur à la longueur d'onde λ entraîne une incertitude sur la valeur du déphasage entre ces deux transducteurs : le déphasage est connu modulo n. Ainsi, pour un même signal détecté par l'antenne lacunaire, la source M peut se trouver en différentes positions angulaires du champ observé. Il y a donc ambiguïté sur la valeur de l'angle θ sous lequel un écho provenant de la source M est « vu » par l'antenne lacunaire 11.

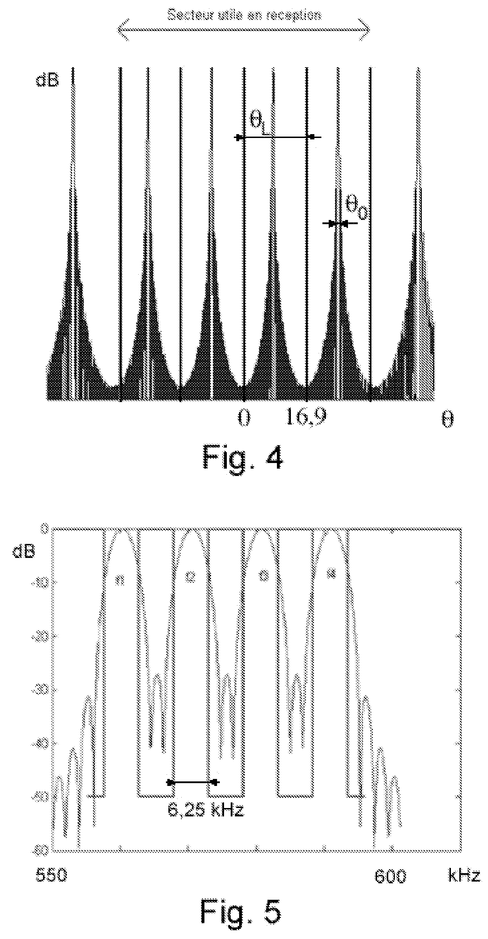

Ainsi, en insonifiant de manière homogène la zone imagée I, on obtient le graphe de la Figure 4 donnant le gain de l'antenne lacunaire 11 en fonction de l'angle θ d'observation. On constate une périodicité du gain de θ_{L}=16,9°. Chaque période correspond à un lobe image de l'antenne 11. Par ailleurs, l'angle d'ouverture θ₀, défini comme le gain à -3dB, d'un lobe image est égal à λ/L avec L = Ni x d soit 0,4°. Pour recouvrir la zone à imager I distante de R=80m et ayant une largeur W=45 m, seuls quatre lobes images utiles parmi l'ensemble des lobes images de l'antenne 11 sont à considérer.

Selon l'invention, au lieu d'insonifier de manière uniforme l'ensemble de la zone à imager I, on réalise une insonification sectorisée. La zone insonifiée E est d'abord divisée en M secteurs E₁-E_{M}, puis, chaque secteur Ei est associé à un lobe image utile particulier. En considérant que quatre lobes images suffisent pour observer la zone à imager, on choisit de diviser la zone insonifiée E en quatre secteurs E₁-E₄ (M=4).

Les moyens d'insonification selon l'invention sont constitués par autant de voies d'émission que de secteurs à insonifier. En l'occurrence, le sonar selon l'invention comporte quatre voies d'émission constituées d'un transducteur fonctionnant en émission et de l'électronique permettant de faire fonctionner cet émetteur.

Les émetteurs utilisés sont directifs, i.e. ils émettent dans un cône d'émission d'angle θₑ choisit de manière à insonifier un unique secteur du fond marin (dont l'ouverture angulaire corresponde à la zone à imager divisée par le nombre de secteurs d'émission.)

Dans le mode de réalisation actuellement préféré, les secteurs E₁-E₄ sont insonifiés, au même instant, mais par des signaux sonores ayant des fréquences caractéristiques différentes. Ainsi, on sait associer un écho d'une fréquence particulière à un secteur, donc à un lobe de l'antenne, c'est-à-dire à un intervalle de valeurs de l'angle θ d'observation. On lève ainsi l'ambiguïté de l'antenne 11.

Dans un autre mode de réalisation de l'invention, les secteurs sont insonifiés successivement dans le temps par un signal sonore de fréquence donnée. La corrélation temporelle entre l'instant de réception de l'écho et l'instant d'émission permet une fois encore d'associer l'écho à un secteur, donc à un lobe image particulier, i.e. à un intervalle de valeurs de l'angle θ d'observation, et ainsi de lever l'ambiguïté de l'antenne 11.

Eventuellement dans encore une autre variante de réalisation de l'invention, on peut combiner ces deux types d'émission sectorisée : par exemple en réalisant une première récurrence d'utilisation du sonar avec une insonification synchronisée à des fréquences différentes, puis, à la récurrence suivante, une insonification désynchronisée à une fréquence donnée.

A la Figure 5, on a représenté un spectre en fréquence des signaux acoustiques respectivement émis par les quatre voies d'émission du sonar. Ce spectre représente la superposition de quatre signaux respectivement centrés sur des fréquences moyennes f₁, f₂, f₃ et f₄.

Pour insonifier un secteur, on cherche à produire un signal qui, centré sur une fréquence moyenne fᵢ, possède une largeur spectrale se rapprochant le plus possible d'une fonction rectangulaire de largeur 6,25 kHz. On notera que les fréquences d'insonification doivent être inférieures à 600 kHz puisque, au-delà de cette fréquence, les effets de propagation dans la masse d'eau sont importants, tout en étant proches de cette limite supérieure pour obtenir une résolution élevée. Par ailleurs, la série des différentes fréquences moyennes choisies doit être comprise dans un intervalle d'environ 50 kHz correspondant à la bande de fréquence de détection de l'antenne 11.

Selon l'exemple représenté sur la figure 5, chaque signal émis par un transducteur d'émission est une fonction dite « code FP » pondérée par une fonction de Hanning, de sorte que, lors de l'insonification d'un secteur à une fréquence moyenne fᵢ, la composante du signal ayant une fréquence fⱼ est négligeable. On évite ainsi les interférences entre le lobe image i et le lobe image j.

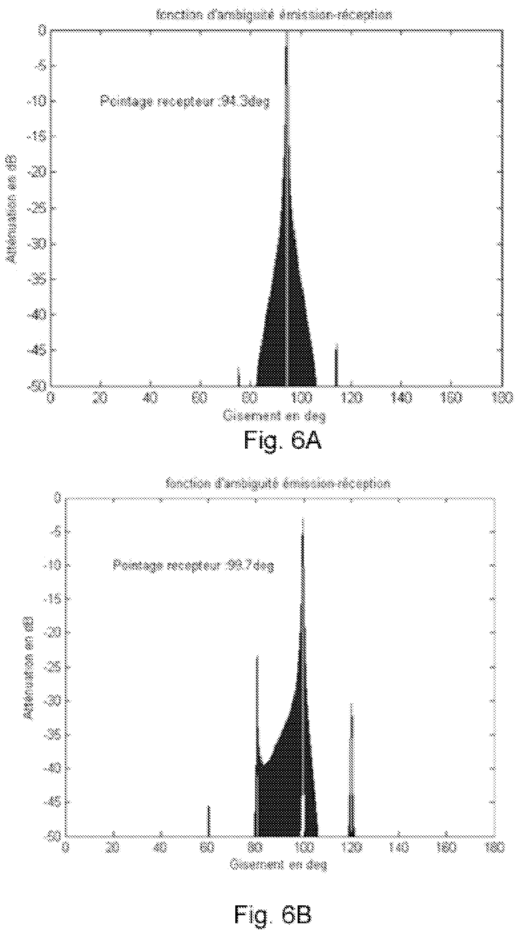

A la Figure 6A, on a représenté la fonction d'ambiguïté lorsque le secteur insonifié est aligné angulairement au lobe image de l'antenne. On constate que les signaux résiduels dans les lobes voisins du lobe considéré ont une très faible amplitude. Ainsi l'ambiguïté de l'antenne a été levée.

En revanche, à la Figure 6B, lorsqu'il existe un léger décalage angulaire entre le secteur insonifié et le lobe image, les signaux résiduels dans les lobes voisins du lobe considéré sont nettement moins atténués et peuvent éventuellement en cas de décalage important ne pas permettre de lever l'ambiguïté de l'antenne lacunaire.

L'étude des antennes réseau est bien documentée et il est fait référence au cours de l'ENSIETA intitulé « traitement d'antenne » par Valérie MAZAURIC, 2003 (ref 1335 DE/SCO-S3-RE/HY).

Le choix d'une antenne lacunaire a une contrepartie sur la fonction de contraste de l'antenne qui est a priori dégradée par rapport à celle d'une antenne contiguë. Le contraste est le rapport entre le signal reçu provenant d'une zone d'ombre sur le lobe principal (à savoir, uniquement le bruit) sur la contribution des autres lobes parasites (lobes secondaires en émission, lobe réseau en réception). Pour ces questions sur la notion de contraste, on se référera à l'ouvrage "sonars et acoustique sous-marine", de Jean-Paul Marage, édité par Thomson-Sintra.

En d'autres termes, le paramètre d'optimisation du contraste est le pas inter-capteur d, puisque celui-ci détermine l'écart angulaire entre deux lobes successifs.

Le critère qui a été retenu pour optimiser le contraste du sonar selon l'invention est un pas inter-capteur d qui permet d'avoir un niveau en émission/réception au maximum de dépointage égale à l'amplitude d'un lobe secondaire classique en émission.

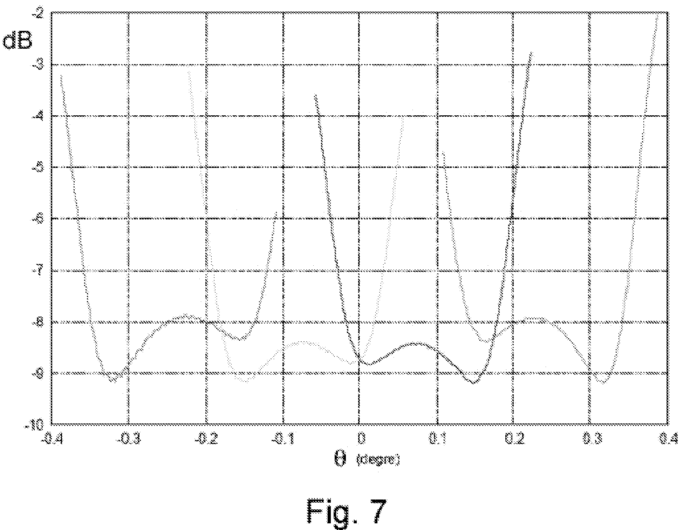

La figure 7 représente les quatre fonctions de contraste sur les quatre lobes utiles.

Bien que l'invention ait été décrite en référence à un mode de réalisation particulier, elle n'est nullement limitée à ce mode de réalisation. Elle comprend tous les équivalents techniques des moyens décrits ainsi que leurs combinaisons qui entrent dans le cadre de l'invention.

En particulier, le sonar frontal selon l'invention peut être utilisé pour la synthèse d'antenne, cohérente ou non-cohérente. Il s'agit de corréler les K signaux des transducteurs sur une pluralité de récurrences de fonctionnement du sonar.

## Revendications

1. Sonar frontal (10) pour observer le fond marin (2) comportant:
- des moyens d'insonification d'une zone du fond marin divisée en M secteurs (E₁-E₄) aptes à réaliser une insonification caractéristique de chacun des secteurs de la zone lors d'une récurrence d'utilisation dudit sonar ; et,
- des moyens de réception comportant une antenne physique (11) composée d'un réseau de K transducteurs, ladite antenne étant lacunaire et par conséquent ambiguë de sorte qu'elle définit N lobes images,
dans lequel chacun desdits secteurs insonifiés de manière caractéristique est associé à un unique lobe image définit par l'antenne, de sorte que ladite ambiguïté de l'antenne est levée,
dans lequel lesdits moyens d'insonification comportent autant de voies d'émission que de secteurs à insonifier de manière caractéristique, et
dans lequel, lors d'une récurrence d'utilisation dudit sonar, chacune des voies d'émission émet autour d'une fréquence moyenne (f₁-f₄) choisie dans une liste de fréquences moyennes, chaque voie d'émission émettant à une fréquence différente de celle d'une autre voie d'émission, la fréquence moyenne caractérisant l'insonification d'un secteur particulier.

2. Sonar selon la revendication 1, **caractérisé en ce qu'**il comporte quatre voies d'émission insonifiant respectivement quatre secteurs, et que quatre lobes utiles parmi les N lobes images de l'antenne sont respectivement associés aux quatre secteurs.

3. Sonar selon la revendication 1 ou 2, **caractérisé en ce que** lesdites moyens d'insonification comprennent des émetteurs directifs aptes à émettre dans un cône d'émission d'angle θₑ, de manière à insonifier un unique secteur du fond marin et **en ce que** chaque secteur insonifié est aligné angulairement à un lobe image de l'antenne, c'est-à-dire associé à un intervalle de valeurs de l'angle θ d'observation.

4. Sonar selon l'une quelconque des revendications 1 à 3, **caractérisé en ce qu'**il autorise une résolution inférieure à 50cm pour une portée de 80m.

5. Sonar selon la revendication 4, **caractérisé en ce qu'**il autorise une résolution de 40cm pour une portée de 80m.

6. Sonar selon l'une des revendications 1 à 5, **caractérisé en ce que** ladite antenne lacunaire a une longueur de 0,7 m, comporte 48 transducteurs et fonctionne à une fréquence de travail de 400 kHz.

7. Porteur (1) immergé comportant un sonar frontal, **caractérisé en ce que** ledit sonar frontal est un sonar (10) selon l'une quelconque des revendications 1 à 6.

8. Porteur selon la revendication 7, **caractérisé en ce qu'**il est muni de sonars latéraux et **en ce que** ledit sonar frontal permet d'obtenir une image sonar ayant une résolution compatible avec la résolution des images obtenues par lesdits sonars latéraux.

9. Procédé d'observation d'une bande du sol marin (W) au moyen d'un sonar frontal (10), ledit sonar (10) étant équipé d'une antenne lacunaire (11) composée d'un réseau de K transducteurs définissant N lobes images, ledit procédé consiste à :
- diviser une zone du fond marin à imager (E) en plusieurs secteurs (E₁-E_{M}) ;
- associer géométriquement à chacun desdits secteurs un lobe image unique ;
- insonifier de manière caractéristique chacun desdits secteurs grâce aux moyens d'insonification dudit sonar ;
- acquérir l'écho des ondes sonores émises au moyen de ladite antenne lacunaire ;
- former les voies de ladite antenne en levant l'ambiguïté de ladite antenne en tenant compte de ladite association d'un lobe image avec un secteur et de ladite insonification caractéristique dudit secteur ;
- obtenir une image de la zone du fond marin (I),
dans lequel, au cours de ladite étape d'insonification chacun desdits secteurs (E₁-E_{M}) est insonifié au moyen d'un signal sonore ayant une fréquence moyenne caractéristique (f₁-f₄), et
dans lequel, lors d'une récurrence d'utilisation dudit sonar, chacune des voies d'émission émet autour d'une fréquence moyenne (f₁-f₄) choisie dans une liste de fréquences moyennes, chaque voie d'émission émettant à une fréquence différente de celle d'une autre voie d'émission, la fréquence moyenne caractérisant l'insonification d'un secteur particulier.

10. Procédé selon la revendication 9, **caractérisé en ce qu'**au cours de ladite étape d'insonification, chacun desdits secteurs (E₁-E_{M}) est insonifié au moyen d'un signal sonore émis à un instant caractéristique de ladite récurrence.

11. Procédé selon la revendication 9 ou 10, **caractérisé en ce que** ladite étape de formation des voies est faites sur K récurrences des étapes d'insonification et d'acquisition de manière à synthétiser une antenne.

## Patentansprüche

1. Frontalsonar (10) zum Beobachten des Meeresgrunds (2), mit:
- Mitteln zum Beschallen einer in M Sektoren (E₁ - E₄) unterteilten Zone des Meeresgrunds, die geeignet sind, bei einer Wiederholung der Benutzung des Sonars eine für jeden Sektor der Zone typische Beschallung zu bewerkstelligen, und
- Einpfängermitteln, die eine physische Antenne (11) aufweisen, die sich aus einem Netz von K Transduktoren zusammensetzt, wobei die Antenne Lücken aufweist und folglich mehrdeutig ist, so daß sie N Bildkeulen definiert,
wobei jeder der in typischer Weise beschallten Sektoren einer einzigen von der Antenne definierten Bildkeule zugeordnet ist, so daß die besagte Mehrdeutigkeit der Antenne beseitigt ist,
wobei die Beschallungsmittel genauso viel Sendewege wie in typischer Weise zu beschallende Sektoren aufweisen, und
wobei bei einer Wiederholung der Benutzung des Sonars jeder der Sendewege um eine mittlere Frequenz (f₁ - f₄) herum sendet, die aus einer Liste mittlerer Frequenzen ausgewählt ist, wobei jeder Sendeweg mit einer anderen Frequenz als ein anderer Sendeweg sendet, wobei die mittlere Frequenz für die Beschallung eines bestimmten Sektors typisch ist.

2. Sonar gemäß Anspruch 1, **dadurch gekennzeichnet, daß** es vier Sendewege aufweist, die vier Sektoren beschallen, und daß vier nutzbare Keulen aus den N Bildkeulen der Antenne jeweilig den vier Sektoren zugeordnet sind.

3. Sonar gemäß Anspruch 1 oder 2, dadurch gelcennzeichnet, daß die Beschallungsmittel Richtsender aufweisen, die geeignet sind, in einem Sendekonus mit dem Windel θₑ zu senden, um einen einzigen Sektor des Meeresbodens zu beschallen, und dadurch, daß jeder beschallte Sektor winkelmäßig auf eine Bildkeule der Antenne ausgerichtet ist, d.h., einem Intervall der Werte des Beobachtungswinkels θ zugeordnet ist.

4. Sonar gemäß einem der Ansprüche 1 bis 3, **dadurch gekennzeichnet, daß** es eine Auflösung von weniger als 50 cm bei einer Reichweite von 80 m ermöglicht.

5. Sonar gemäß Anspruch 4, **dadurch gekennzeichnet, daß** es eine Auflösung von 40 cm bei einer Reichweite von 80 m ermöglicht.

6. Sonar gemäß einem der Ansprüche 1 bis 5, **dadurch gekennzeichnet, daß** die Lücken aufweisende Antenne eine Länge von 0,7 m hat, 48 Transduktoren aufweist und bei einer Arbeitsfrequenz von 400 kHz arbeitet.

7. Eingetauchter Träger (1), der ein Frontalsonar aufweist, **dadurch gekennzeichnet, daß** das Frontalsonar ein Sonar (10) gemäß einem der Ansprüche 1 bis 6 ist.

8. Träger gemäß Anspruch 7, **dadurch gekennzeichnet, daß** er mit Seitensonars versehen ist und daß das besagte Frontalsonar ermöglicht, ein Sonarbild zu erhalten, das eine Auflösung aufweist, die mit der Auflösung der durch die Seitensonars erhaltenen Bilder kompatibel ist.

9. Verfahren zum Beobachten eines Streifens des Meeresbodens (W) mittels eines Frontalsonars (10), wobei das Sonar (10) eine Lücken aufweisende Antenne (11) aufweist, die sich aus einem Netz von K Transduktoren zusammensetzt, die N Bildkeulen definiert, wobei das Verfahren darin besteht,
- eine abzubildende Zone des Meeresbodens (E) in mehrere Sektoren (E₁ - E_{M}) zu unterteilen,
- jedem der Sektoren geometrisch eine einzige Bildkeule zuzuordnen,
- jeden der Sektoren mittels der Beschallungsmittel des Sonars in typischer Weise zu beschallen,
- das Echo der ausgestrahlten Schallwellen mittels der Lücken aufweisenden Antenne einzufangen,
- die Wege der Antenne zu bilden, indem die Mehrdeutigkeit der Antenne durch Berücksichtigung der Zuordnung einer Bildkeule zu einem Sektor und der Beschallung des Sektors in typischer Weise beseitigt wird,
- ein Bild der Zone des Meeresbodens (I) zu erhalten,
wobei im Verlaufe des Verfahrensschritts der Beschallung jeder der Sektoren (E₁ - E_{M}) mit einem eine mittlere Frequenz (f₁ - f₄) aufweisenden Schallsignal beschallt wird, und
wobei bei einer Wiederholung der Benutzung des Sonars jeder der Sendewege um eine mittlere Frequenz (f₁ - f₄) herum sendet, die aus einer Liste mittlerer Frequenzen ausgewählt ist, wobei jeder Sendeweg mit einer anderen Frequenz als ein anderer Sendeweg sendet.

10. Verfahren gemäß Anspruch 9, **dadurch gekennzeichnet, daß** im Verlaufe des Verfahrensschritts der Beschallung jeder der Sektoren (E₁ - E_{M}) mit einem Schallsignal beschallt wird, das zu einem typischen Zeitpunkt der Wiederbenutzung ausgesendet wird.

11. Verfahren gemäß Anspruch 9 oder 10, dadurch gekenntzeichnet, daß der Verfahrensschritt der Bildung der Wege über K Wiederholungen der Verfahrensschritte der Beschallung und des Einfangens erfolgt, um eine Antenne zu synthetisieren.

## Claims

1. Frontal sonar (10) for observing the seafloor (2), comprising:
- means for insonifying a seafloor area divided into M sectors (E₁-E₄), able to perform a characteristic insonification of each of the sectors of the area during an operation recurrence of said sonar; and,
- receiving means comprising a physical antenna (11) consisting of an array of K transducers, said antenna being lacunar and thus ambiguous thereby defining N image lobes,
wherein each of said characteristically insonified sectors is associated with a single image lobe defined by the antenna, so that said antenna ambiguity is removed,
wherein said insonification means comprise as many emission channels as there are sectors to be characteristically insonified, and
wherein during an operation recurrence of said sonar, each of the emission channels emits around an average frequency (f₁-f₄) chosen in a list of average frequencies, each emission channel emitting at a frequency different from that of another emission channel, the average frequency characterising the insonification of a particular sector.

2. Sonar according to claim 1, **characterised in that** it comprises four emission channels insonifying four sectors respectively, and **in that** four useful lobes among the N image lobes of the antenna are associated with the four sectors respectively.

3. Sonar according to claim 1 or 2, **characterised in that** said insonification means comprise directive emitters able to emit in an emission cone having an angle θₑ so as to insonify a single sector of the seafloor and **in that** each insonified sector is lined up angularly with an image lobe of the antenna, i.e. associated with an interval of values of the observation angle θ.

4. Sonar according to any of claims 1 to 3, **characterised in that** it provides a resolution lower than 50 cm for a range of 80 m.

5. Sonar according to claim 4, **characterised in that** it provides a resolution of 40 cm for a range of 80 m.

6. Sonar according to any of claims 1 to 5, **characterised in that** said lacunar antenna is 0.7 m long, comprises 48 transducers and operates at a working frequency of 400 kHz.

7. Submerged carrier (1) comprising a frontal sonar, **characterised in that** said frontal sonar is a sonar (10) according to any of claims 1 to 6.

8. Carrier according to claim 7, **characterised in that** it is equipped with lateral sonars and **in that** said frontal sonar enables to obtain a sonar image having a resolution compatible with the resolution of images obtained by said lateral sonars.

9. Method of observing a seafloor strip (W) by means of a frontal sonar (10), said sonar (10) being provided with a lacunar antenna (11) consisting of an array of K transducers defining N image lobes, said method consisting in:
- dividing a seafloor area to be imaged (E) into several sectors (E₁-E_{M});
- geometrically associating a single image lobe with each of said sectors;
- characteristically insonifying each of said sectors using the insonification means of said sonar;
- acquiring the echo of the sound waves emitted by means of said lacunar antenna;
- forming the channels of said antenna while removing ambiguity of said antenna, taking into account said association of an image lobe with a sector and said characteristic insonification of said sector;
- obtaining an image of the seafloor area (I),
wherein during said insonification step, each of said sectors (E₁-E_{M}) is insonified by means of a sound signal having a characteristic average frequency (f₁-f₄), and
wherein during an operation recurrence of said sonar, each of the emission channels emits around an average frequency (f₁-f₄) chosen in a list of average frequencies, each emission channel emitting at a frequency different from that of another emission channel, the average frequency characterising the insonification of a particular sector

10. Method according to claim 9, **characterised in that** during said insonification step, each of said sectors (E₁-E_{M}) is insonified by means of a sound signal emitted at an instant characteristic of said recurrence.

11. Method according to claim 9 or 10, **characterised in that** said channel forming step is performed over K recurrences of the insonification and acquisition steps in order to synthesize an antenna.
